(19) Europäisches Patentamt
European Patent Office
Office européen des brevets

(11) **EP 1 514 279 B1**

(12) **FASCICULE DE BREVET EUROPEEN**

(45) Date de publication et mention
de la délivrance du brevet:
**14.01.2009 Bulletin 2009/03**

(51) Int Cl.:
***G21K 1/06*** *(2006.01)*     ***G01N 23/20*** *(2006.01)*

(21) Numéro de dépôt: 03760747.0

(22) Date de dépôt: **19.06.2003**

(86) Numéro de dépôt international:
**PCT/FR2003/001879**

(87) Numéro de publication internationale:
**WO 2004/001769 (31.12.2003 Gazette 2004/01)**

(54) **DISPOSITIF OPTIQUE POUR APPLICATIONS RAYONS X**

OPTISCHE VORRICHTUNG FÜR RÖNTGENSTRAHLUNGSANWENDUNGEN

OPTICAL DEVICE FOR X-RAY APPLICATIONS

(84) Etats contractants désignés:
**AT BE BG CH CY CZ DE DK EE ES FI FR GB GR HU IE IT LI LU MC NL PT RO SE SI SK TR**

(30) Priorité: **19.06.2002 FR 0207546**
**21.01.2003 FR 0300623**

(43) Date de publication de la demande:
**16.03.2005 Bulletin 2005/11**

(73) Titulaire: **Xenocs**
**38360 Sassenage (FR)**

(72) Inventeurs:
• **HOGHOJ, Peter**
**F-38950 Saint Martin le Vinoux (FR)**
• **DARIEL, Aurélien**
**F-38250 Saint Nizier du Moucherotte (FR)**
• **RODRIGUES, Sergio**
**F-38340 Voreppe (FR)**

(74) Mandataire: **Texier, Christian et al**
**Cabinet Régimbeau**
**20, rue de Chazelles**
**75847 Paris Cedex 17 (FR)**

(56) Documents cités:
**US-A- 5 799 056**     **US-A- 5 999 262**
**US-B1- 6 317 483**

• **SASANUMA Y ET AL: "A point-focusing small-angle x-ray scattering camera using a doubly curved monochromator of a W/Si multilayer" REVIEW OF SCIENTIFIC INSTRUMENTS, AMERICAN INSTITUTE OF PHYSICS. NEW YORK, US, vol. 67, no. 3, 1 mars 1996 (1996-03-01), pages 688-692, XP002079328 ISSN: 0034-6748**
• **SCHUSTER M.; GÖBEL H.: 'parallel beam coupling into channel cut monochromators using curev graded multilayers' J PHYS D: APPL PHYS vol. 28, 1995, pages A270 - A275**

**Description**

La présente invention concerne un dispositif optique pour des applications d'instrumentation Rayons X de hautes résolutions en longueur d'onde.

Plus précisément, l'invention concerne un dispositif optique destiné à traiter un faisceau incident de rayons X, ledit dispositif comprenant :

● un monochromateur et

● un élément optique de conditionnement du faisceau incident dont la surface réfléchissante est apte à produire un effet optique bidimensionnel pour adapter un faisceau à destination du monochromateur, ledit élément optique comprenant une surface réfléchissante aux rayons X de type structure multicouche.

On précise que la ou les surface(s) réfléchissante(s) mise(s) en oeuvre peuvent être en particulier de type multicouche à gradient latéral.

L'invention s'applique ainsi dans l'ensemble des domaines d'instrumentation Rayons X utilisant des monochromateurs.

A titre d'exemple, on peut citer de manière non limitative les applications suivantes :

● Diffractométrie Rayons X de haute résolution,
● Fluorescente Rayons X,
● Applications de micro mapping (ou micro cartographie) Rayons-X pour la microélectronique.

L'invention s'applique à des domaines d'instrumentation Rayons X nécessitant une excellente pureté spectrale et donc l'utilisation d'un monochromateur.

L'élément constitutif de base du monochromateur est un cristal qui permet d'atteindre de très hautes résolutions, angulaires et en longueur d'onde. Le monochromateur peut être constitué d'un cristal ou de plusieurs cristaux alignés.

Pour les monochromateurs du type mentionné ci-dessus, la diffraction des rayons X incidents s'effectue selon la loi de Bragg.

On rappelle que la condition de Bragg pour un cristal est de la forme $n\lambda = 2d\sin\theta_\beta$ où n est l'ordre de réflexion, $\lambda$ la longueur d'onde de la radiation incidente pour laquelle la diffraction se produit, d la période d'espacement entre les plans atomiques du cristal impliqués dans la diffraction et $\theta_\beta$ l'angle d'incidence sur ces mêmes plans atomiques qui est nécessaire pour que le phénomène de diffraction se produise.

Si on considère un faisceau incident de rayons X, les rayons de longueurs d'onde $\lambda$ frappant le cristal avec un angle d'incidence $\theta_\beta$ bien précis par rapport à une certaine famille de plans atomiques du cristal seront diffractés par ces mêmes plans atomiques si la condition de Bragg indiquée ci-dessus est vérifiée.

Ce phénomène de diffraction d'un faisceau monochromatique se produit avec une certaine acceptance angulaire $\Delta\theta$ autour de l'angle de référence $\theta_\beta$.

Cette acceptance angulaire peut donc être définie par :

● Un angle $\theta_\beta$ correspondant à l'angle d'incidence de référence des rayons diffractés sur le monochromateur ($\theta_\beta$ est connu sous le nom d'angle de Bragg), $\theta_\beta$ étant fonction du cristal et de la longueur d'onde et correspondant au maximum du pic de réflectivité $R = f(\theta)$ pour une longueur d'onde donnée, et
● Une tolérance de $\Delta\theta$ autour de cet angle d'incidence de référence. La tolérance définit la largeur de l'intervalle d'incidences qui correspond à l'acceptance angulaire.

Les monochromateurs mis en oeuvre dans les dispositifs du type mentionné ci-dessus présentent une acceptance angulaire très réduite. A titre d'exemple, pour un monochromateur en cristal de Germanium, utilisé par exemple pour des applications où la source rayons X est une source Cuivre Ka ($\lambda = 1,54$ Angströms), l'acceptance angulaire est de 0,00336° (autour d'un angle d'incidence de référence de 20° environ).

On comprend donc qu'à partir d'une source rayons X donnée (cette source pouvant être par exemple de type anode tournante, tubes rayons X ou micro source), en l'absence d'un conditionnement approprié des rayons-X émis par la source, un grand nombre de ces rayons qui sont émis dans toutes les directions parviennent sur le monochromateur avec un angle d'incidence bien en dehors de acceptance angulaire du monochromateur.

Ces photons ne pourront être réfléchis par le monochromateur et occasionnent ainsi des pertes de flux très importantes.

## Présentation de l'état de l'art

Pour tenter de pallier cet inconvénient, il est connu de disposer en amont du monochromateur des moyens de conditionnement du faisceau incident.

De tels moyens de conditionnement ont pour fonction principale d'orienter la plus grande partie possible des rayons X incidents, selon une incidence (par rapport à la surface du monochromateur) qui soit comprise dans la plage d'incidence définie par l'acceptance angulaire du monochromateur autour d'un angle d'incidence de référence θß

Il est ainsi connu de réaliser ces moyens de conditionnement sous la forme d'un capillaire en verre permettant de collecter par réflexion totale un faisceau initial divergent issu d'une source et de le collimater en un faisceau dirigé vers un monochromateur.

Mais une limitation associée à de tels moyens de conditionnement est que ce genre de composant optique ne peut réfléchir les rayons X que sous de très faibles angles d'incidence (inférieurs à 0,1° typiquement).

En conséquence, le flux délivré par l'optique est généralement faible.

Il est également connu de réaliser les moyens de conditionnement sous la forme d'un élément optique multicouche produisant un effet optique monodimensionnel. Ces éléments optiques ont une forme parabolique qui permet de collimater le faisceau incident divergent, et un revêtement multicouche qui permet de diffracter les rayons X incidents selon la loi de Bragg.

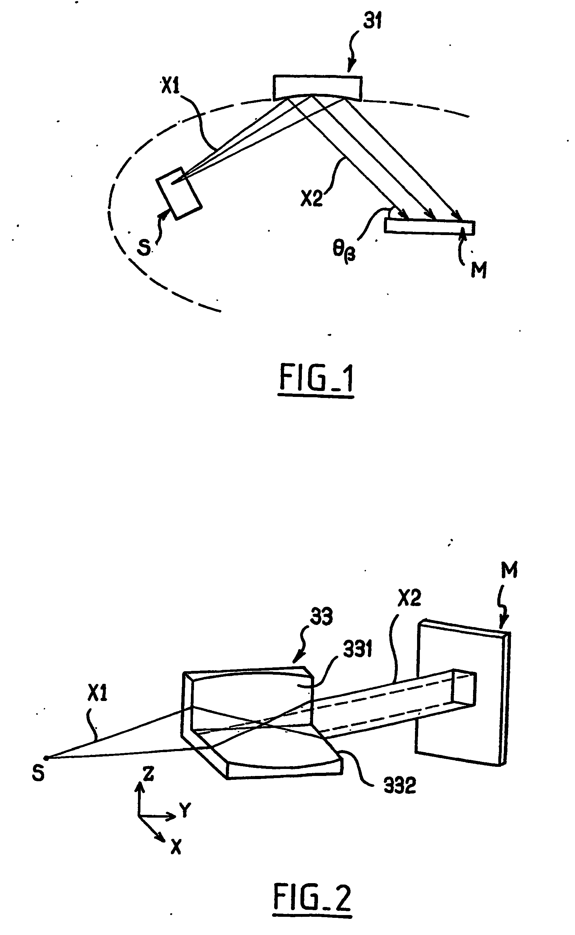

On trouvera une illustration de cette configuration connue sur la figure 1, qui représente une source S de rayons X produisant un faisceau initial X1 présentant une certaine divergence, à destination de moyens de conditionnement 31 (la parabole dans laquelle s'inscrit la surface de ces moyens de conditionnement étant représentée en pointillés).

Ici encore, les moyens de conditionnement réfléchissent le faisceau initial X1 en un faisceau X2 dirigé vers un monochromateur M.

Un tel élément optique monodimensionnel est connu sous le nom de miroir de Göbel.

Dans le cas de substrats courbés tels que les miroirs de Göbel, le multicouche a une structure de couche (on entend par là la période d du multicouche) qui varie le long du miroir afin de maintenir les conditions de Bragg sur une surface importante du miroir.

Un tel miroir multicouche à gradient latéral permet ainsi la réflexion des rayons X dont la longueur d'onde appartient à un domaine prédéterminé, par différentes régions du miroir sur lesquelles les rayons incidents présentent des angles d'incidence locaux variables.

De tels moyens de conditionnement permettent de collimater le faisceau incident en un faisceau X2 dans lequel les directions de propagation des rayons X sont rendues sensiblement parallèles à une direction incidente par rapport au monochromateur qui correspond à la valeur $\theta_{ß}$ de ce monochromateur, et ce dans la plage d'acceptance angulaire du monochromateur.

Mais de tels moyens de conditionnement ne permettent la collimation d'un faisceau initial X1 que selon un seul plan (le plan de la figure 1 dans l'exemple qui vient d'être décrit).

Les divergences dans les plans perpendiculaires à ce plan ne sont ainsi pas traitées : il en résulte que de nombreux rayons X ne sont pas exploitables.

Une limitation de ces moyens de conditionnement connus à effet monodimensionnel est ainsi que pour un faisceau initial X1 donné, le flux de rayons X collimatés selon une direction compatible avec l'acceptance angulaire du monochromateur demeure limité.

Et on rappelle en outre à cet égard qu'il est nécessaire d'avoir en sortie du monochromateur un faisceau de petite dimension dans les domaines d'application de l'invention (typiquement inférieur à 2mm).

Le faisceau issu du monochromateur génère en effet une « tache image » dont les dimensions doivent être de cet ordre de grandeur.

La tache image est comprise dans un plan dit « plan image »

Pour augmenter le flux « utile » arrivant sur le monochromateur, il est connu de réaliser les moyens de conditionnement du faisceau initial sous la forme d'optiques bidimensionnels dont la surface réfléchissante présente un gradient latéral.

De tels optiques sont réalisés sous la forme d'un dispositif "Kirkpatrick-Baez en regard", comme cela est illustré sur la figure 2.

Dans la suite de ce texte, on désignera par « KB » la configuration « Kirkpatrick-Baez ».

Cette figure illustre ainsi un élément 33 comportant deux miroirs 331 et 332 accolés en regard l'un de l'autre (axe parallèle à la direction Z pour le miroir 331, à la direction X pour le miroir 332).

Les surfaces de ces deux miroirs présentent des courbures centrées sur deux axes perpendiculaires l'un à l'autre.

Pour ce type d'optique, le conditionnement désiré est assuré par une double réflexion, chaque miroir 331, 332 produisant un effet optique monodimensionnel selon un axe.

Chacun des deux miroirs peut ainsi produire une collimation, ou une focalisation.

Un monochromateur M reçoit le flux X2 réfléchi par l'élément 33.

On trouvera une description de ce type d'élément optique 33 dans le brevet US 6 041 099.

On précise que les moyens de conditionnement peuvent également être réalisés sous la forme d'un dispositif «KB» dont les deux miroirs ne sont pas disposés en regard l'un de l'autre.

Par rapport à des moyens de conditionnement de type miroirs de Göbel, de tels moyens de conditionnement à effet bidimensionnel permettent de récupérer dans une plage d'incidences compatibles avec l'acceptance angulaire d'un monochromateur une plus grande proportion de rayons issus d'un faisceau initial X1 divergent.

Un but de l'invention est d'améliorer encore les performances de ces dispositifs.

En particulier, l'invention vise à collecter un maximum de flux à partir d'un faisceau initial divergent et produire en sortie un flux monochromatique supérieur par rapport à ce que peut produire un dispositif comprenant des moyens de conditionnement tels que décrits ci-dessus.

L'invention vise ainsi notamment, pour augmenter le flux en sortie de ces dispositifs, à permettre d'exploiter des sources de rayons X de taille augmentée.

L'invention vise également à permettre d'améliorer la compacité de ces dispositifs.

Afin d'atteindre ces buts, l'invention proprose un dispositif optique destiné à traiter un faisceau incident de rayons X, ledit dispositif comprenant :

- ● un monochromateur (M) et
- ● un élément optique (20) de conditionnement du faisceau incident dont la surface réfléchissante est apte à produire un effet optique bidimensionnel pour adapter un faisceau à destination du monochromateur, ledit élément optique comprenant une surface réfléchissante aux rayons X de type structure multicouche,

caractérisé par le fait que ladite surface réfléchissante est constituée d'une surface unique, ladite surface réfléchissante étant conformée selon deux courbures correspondant à deux directions différentes pour produire deux effets monodimensionnels respectifs, l'un des effets étant une collimation pour limiter la divergence angulaire dans le plan de diffraction du monochromateur et l'autre effet étant une focalisation.

Des aspects préférés, mais non limitatifs, de ce dispositif sont les suivants :

- ● ladite surface réfléchissante unique est du type multicouche à gradient latéral,
- ● ladite surface réfléchissante unique comporte un gradient en profondeur,
- ● ladite surface réfléchissante a une géométrie sensiblement circulaire selon une première direction, et sensiblement parabolique selon une deuxième direction,
- ● ladite première direction est la direction sagittale de l'élément optique, et la deuxième direction est la direction méridionale de l'élément optique,
- ● ladite surface réfléchissante a une géométrie sensiblement toroïdale,
- ● ladite surface réfléchissante a une géométrie sensiblement paraboïdale,
- ● ladite surface réfléchissante a une géométrie sensiblement ellipsoïdale,
- ● ladite surface réfléchissante est apte à réfléchir des rayons des raies Cu-K$\alpha$ ou Mo-K$\alpha$,
- ● le monochromateur est un cristal de germanium et l'élément optique de conditionnement est constitué d'un revêtement multicouche W/Si à gradient latéral,
- ● l'élément optique dudit dispositif a une longueur de l'ordre de 2 cm, ledit dispositif pouvant être mis en oeuvre avec une source de rayons X dont la taille est de l'ordre de quelques dizaines de microns par quelques dizaines de microns, pour produire une tache échantillon de l'ordre de 300*300 microns.

D'autres aspects, buts et avantages de l'invention apparaîtront mieux à la lecture de la description suivante de l'invention, faite en référence aux dessins annexés sur lesquels, outre les figures 1, et 2 qui ont été commentées en référence à l'état de la technique :

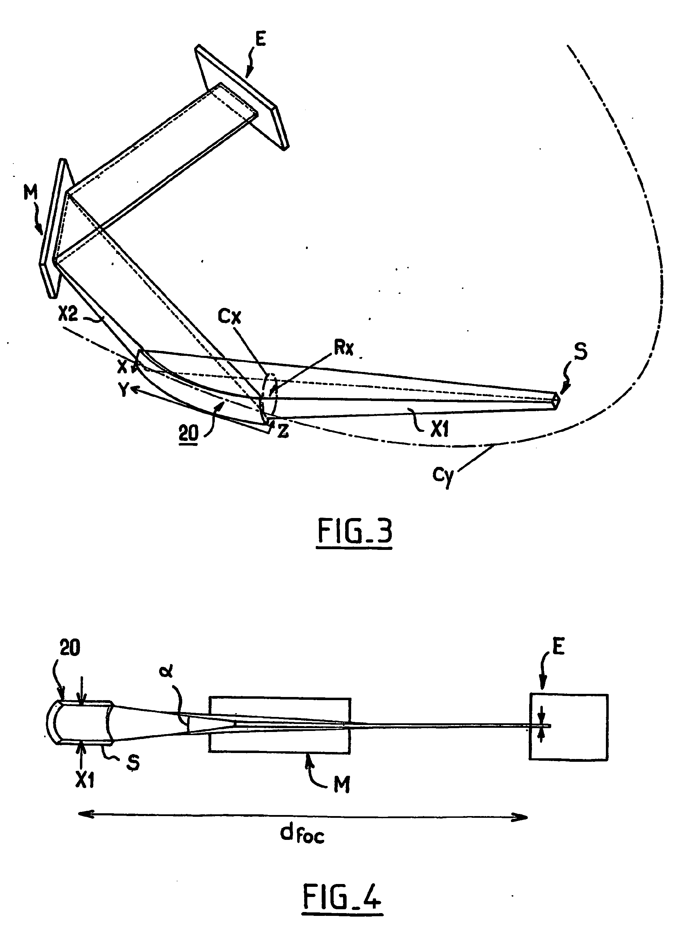

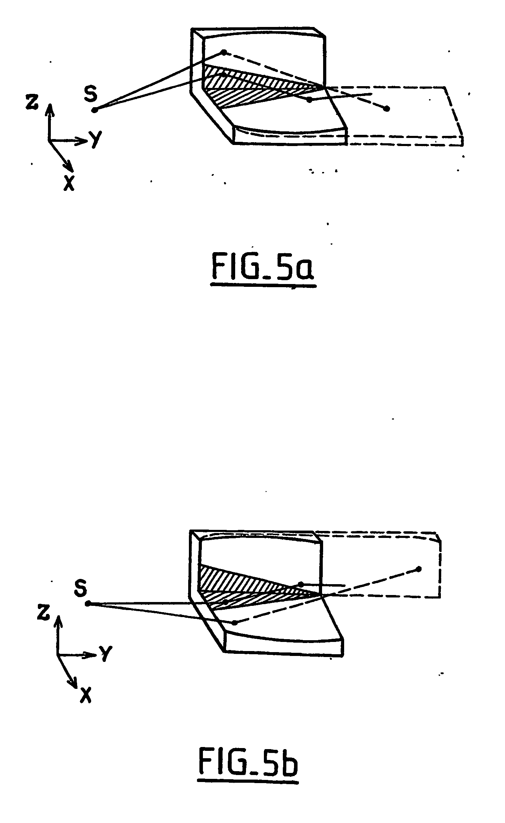

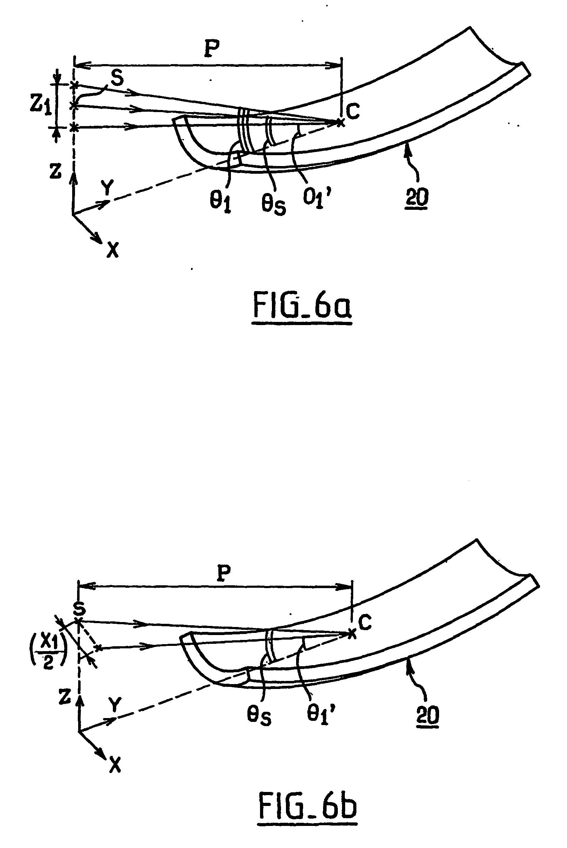

- ● la figure 3 représente une vue d'ensemble d'un dispositif optique selon un mode de mise en oeuvre de l'invention,
- ● la figure 4 est une vue de dessus du même dispositif,
- ● les figures 5a et 5b illustrent l'allongement qui serait requis dans le cas de l'adaptation de dispositifs de type connu, pour atteindre des performances comparables à un dispositif selon l'invention, qui est plus compact.
- ● Les figures 6a et 6b sont des schémas d'illustration permettant de déterminer la divergence angulaire tolérée en un point donné d'un élément optique de conditionnement à effet bidimensionnel tel que considéré dans l'invention.

On précise en préambule à cette description que les figures sont destinées à illustrer le principe de l'invention, et ne représentent pas nécessairement les dimensions et échelles de manière réalistes.

Ceci est vrai en particulier pour les angles d'incidence (voire de réflexion) des rayons X.

Ces rayons X arrivent en réalité sur les surfaces réfléchissantes selon l'invention avec une incidence inférieure à 10°.

On définit également les directions méridionale et sagittales par rapport à la direction générale de propagation du faisceau de rayons X :

● La direction méridionale correspond à la direction moyenne de propagation de ce faisceau (et plus précisément à la direction moyenne entre les directions moyennes de propagation du faisceau avant et après sa réflexion sur les ensembles optiques dont il va être question),
● La direction sagittale correspond à une direction transversale horizontale de cette direction méridionale (la verticale étant ici définie par la normale moyenne à la partie de la surface réfléchissante des ensembles optiques qui vont être décrits et qui est effectivement utilisée pour réfléchir le faisceau de rayons X incident).

### Description d'un mode de mise en oeuvre de l'invention

En référence à la figure 3, on a représenté un dispositif selon l'invention placé en amont d'un échantillon E.

Ce dispositif comprend :

● des moyens de conditionnement d'un faisceau initial de rayons X, noté X1 et présentant une certaine divergence,
● un monochromateur M associé à une acceptance angulaire donnée.

Les moyens de conditionnement sont dans ce mode de mise en oeuvre de l'invention réalisés sous la forme d'un élément optique 20 destiné à réfléchir les rayons du faisceau initial X1 issu d'une source S de rayons X.

Dans le cas de la figure 3, l'élément optique 20 assure une collimation dans une première dimension et une focalisation dans une deuxième dimension différente.

La source S peut être en particulier du type tube à rayons X, anode tournant, ou encore source de rayons X à microfoyer.

L'élément optique 20 comprend une structure multicouche formée sur un substrat (par exemple en verre), qui définit une surface réfléchissante pour les rayons X du faisceau X1.

La surface réfléchissante unique de cet élément optique a une géométrie particulière.

Plus précisément, cette surfaces réfléchissante est conformée selon deux courbures correspondant à deux directions différentes.

Et cette surface réfléchissante présente ainsi des différences importantes par rapport à des surfaces réfléchissantes du type de celles mises en oeuvre dans des ensembles optiques tels que ceux enseignés par le document US 6 041 099 :

● La surface réfléchissante est une surface réfléchissante unique, au contraire de ce qui est le cas pour des ensembles optiques dans lesquels on a assemblé deux miroirs élémentaires différents,
● Cette surface réfléchissante est régulière (ce terme signifiant dans le présent texte que la surface réfléchissante ne présente pas de discontinuité de deuxième ordre : points anguleux ou arêtes - saillantes ou creuses - etc..),
● Par ailleurs, une différence qui est également importante est que dans le cas de l'invention, les rayons incidents ne subissent qu'une réflexion unique pour produire l'effet optique bidimensionnel désiré, alors que deux réflexions sont nécessaires dans le cas d'un ensemble optique mettant en oeuvre des moyens de conditionnement reproduisant par exemple les enseignements du document US 6 041 099.

### Description de l'élément optique de conditionnement considéré dans l'invention

Avant de décrire en détail le mode de réalisation illustré sur la figure 3, on va exposer les caractéristiques générales de l'invention.

La surface réfléchissante de l'élément optique selon l'invention présente une courbure Cx dans la direction X sagittale, et une courbure Cy dans la direction Y méridionale.

La figure 3 permet de visualiser ces courbures, deux courbes Cx et Cy ayant été représentées en pointillés.

Chacune des courbes Cx, Cy peut être un cercle, mais également une ellipse, une parabole, ou une autre courbe (ouverte ou fermée).

En tout état de cause, la surface réfléchissante de l'élément optique de conditionnement n'a pas une forme simple sphérique.

Chacune des courbes Cx, Cy est ainsi associée à une direction différente de l'espace (deux directions perpendiculaires sur l'exemple commenté ici).

Et chacune de ces courbes produit sur les rayons X qui viennent être réfléchis sur la surface réfléchissante un effet optique monodimensionnel :

- La courbe Cx produit un effet optique monodimensionnel selon la direction X,
- La courbe Cy produit un effet optique monodimensionnel selon la direction Y.

Et chacun de ces effets dimensionnels dépend de la courbure associée à la courbe, et de sa loi d'évolution le long de cette courbe.

On pourra ainsi paramétrer les courbes Cx et Cy pour obtenir sélectivement des effets monodimensionnels associés tels qu'une focalisation ou une collimation monodimensionnelle.

La figure 3 représente un mode de réalisation de l'invention.

Dans ce mode de réalisation, la courbe Cx produit une focalisation monodimensionnelle, et la courbe Cy produit une collimation monodimensionnelle.

La surface réfléchissante du multicouche de l'élément optique 20 de la figure 3 est à cet effet conformée dans les directions respectives X et Y selon deux courbes Cx et Cy respectivement circulaire et parabolique, chacune de ces courbes produisant un effet monodimensionnel dans un plan donné, respectivement dans le plan X Y et dans le plan Y Z.

On génère ainsi à partir du faisceau X1 divergent une collimation dans une dimension de l'espace et une focalisation dans une autre dimension.

Selon une variante les moyens de conditionnement du faisceau incident sur le monochromateur peuvent être un élément optique assurant une collimation en deux dimensions.

Dans ce cas, les courbes Cx et Cy sont toutes deux conformées en paraboles.

Revenant au mode de réalisation de l'invention de la figure 3, le monochromateur M est positionné de manière à ce que la direction moyenne du faisceau X2 corresponde à l'angle d'incidence $\theta_\beta$ du monochromateur, ou à un angle compatible avec l'acceptance angulaire de ce monochromateur.

On maximise de la sorte dans la direction verticale (direction Z) mais également dans la direction sagittale le flux de rayons X qui arrive sur le monochromateur à l'intérieur des tolérances définies par l'acceptance angulaire de ce monochromateur.

On précise qu'il est ainsi possible de réaliser selon l'invention des moyens de conditionnement avec des éléments optiques composés d'un miroir multicouche (à gradient latéral, et éventuellement en outre à gradient en profondeur comme on va le voir plus loin dans ce texte), dont la surface réfléchissante peut avoir une parmi différentes formes complexes asphériques permettant de remplir la fonction nécessaire pour rediriger le faisceau réfléchi X2 vers le monochromateur.

Il est ainsi possible en particulier de donner à cette surface réfléchissante une des géométries suivantes :

- géométrie de forme sensiblement toroïdale,
- géométrie de forme sensiblement paraboloïdale,
- géométrie de forme sensiblement ellipsoïdale,
- géométrie de forme sensiblement circulaire selon une première direction (en particulier la direction sagittale), et sensiblement parabolique selon une deuxième direction (en particulier la direction méridionale).

Le gradient latéral, pourra en particulier s'étendre selon la direction méridionale des rayons X incidents.

Et la période du multicouche pourra être adaptée pour réfléchir en particulier des rayons des raies Cu-K$\alpha$ ou Mo-K$\alpha$.

Dans le cas d'un mode de réalisation de l'invention avec une focalisation dans le plan sagittal, (c'est-à-dire dans le plan X Y dans la figure 3) le rayon de courbure Rx (rayon de courbure sagittale) peut avoir une valeur inférieur à 20 mm, nécessaire pour des focalisations sur de courtes distances, inférieures à 90 cm (distance source-point de focalisation) selon une application privilégiée de l'invention.

On remarquera que l'élément optique utilisé comme moyen de conditionnement de faisceau dans le dispositif selon l'invention permet de s'affranchir des inconvénients et limitations des ensembles optiques de type KB. En particulier :

- cet ensemble optique est monopièce (ne nécessitant pas d'assemblage délicat).
- les rayons X incidents ne subissent qu'une réflexion unique sur sa surface réfléchissante.

On a dit que la surface réfléchissante de l'élément optique 20 était définie par un multicouche.

Ce multicouche (comme tous les multicouches dont il sera question dans ce texte) comporte dans pratiquement tous les cas au minimum un « gradient latéral ».

Cette caractéristique permet de réfléchir efficacement des rayons X présentant des incidences locales différentes par rapport à la surface réfléchissante de l'élément 20.

On comprend en effet que les différents endroits de cette surface réfléchissante ne reçoivent pas les rayons X incidents avec la même incidence locale (du fait de la divergence du faisceau incident, et de la géométrie de cette surface réfléchissante).

Par multicouche à gradient latéral, on entend ici un multicouche dont la structure de couche est adaptée pour que la condition de Bragg soit respectée en tout point de la surface utile du miroir.

Ainsi, pour un rayonnement de rayons X incidents selon une bande étroite de longueur d'onde contenant par exemple les raies K$\alpha$ du cuivre (raies Cu-K$\alpha$ de longueurs d'onde voisines de 0.154 nm), le miroir multicouche à gradient latéral permet de maintenir les conditions de Bragg sur l'ensemble de la surface utile du miroir.

Ceci conduit à la réflexion de la bande de longueur d'onde prédéterminée (dans l'exemple ci-dessus contenant les raies Cuivre K$\alpha$), par différentes régions du miroir sur lesquelles les rayons incidents présentent des angles d'incidence locaux variables.

On peut ainsi augmenter la surface du miroir qui est effectivement utilisée.

Le gradient est obtenu en faisant varier la période du multicouche en fonction de la position sur le miroir.

Ce type de structure multicouche à gradient latéral permet ainsi d'augmenter l'angle solide de collection de l'ensemble optique, ce qui conduit à un flux réfléchi plus élevé par rapport à des miroirs monocouches fonctionnant en réflexion totale, pour une géométrie d'optique identique.

On notera toutefois que dans des cas extrêmes, le multicouche pourra ne pas posséder de gradient latéral notamment si la courbure de l'élément optique est faible et ne nécessite pas ce type de gradients.

On précise que le multicouche des différents modes de réalisation de l'invention peut également présenter un gradient en profondeur.

Un tel gradient en profondeur permet de remplir les conditions de Bragg pour des angles d'incidences fixes et des longueurs d'ondes variables, ou vice-versa.

Il est ainsi possible par exemple d'augmenter la bande passante en longueur d'onde du multicouche de l'ensemble optique, et de focaliser ou collimater des rayons X de longueurs d'ondes différentes, au niveau d'un même plan image donné (cas d'une géométrie fixe - c'est à dire d'une configuration dans laquelle les positions relatives de la source de rayons incidents, de l'ensemble optique et du plan image sont fixes).

On peut de la sorte utiliser des sources de rayons X de longueurs d'ondes différentes pour réfléchir les rayons X issus des différentes sources avec le même ensemble optique, sans que cela nécessite un nouveau positionnement de la source et/ou du ou des plan(s) image par rapport à l'ensemble optique.

On utilise dans ce cas la tolérance en longueur d'onde de J'ensemble optique (tolérante en $\Delta\lambda$).

De la même façon, il est également possible de traduire cette tolérance en $\Delta\lambda$ en une tolérance en $\Delta\theta$, $\theta$ étant l'angle d'incidence sur l'élément 20.

Une tolérance sur la longueur d'onde correspondant en effet - dans le cadre de la condition de Bragg - à une tolérance sur l'angle d'incidence, il est possible à longueur d'onde constante du faisceau incident de collecter et de réfléchir un flux lumineux incident dont les rayons de même longueur d'onde ont des incidences locales différentes.

On peut en particulier de la sorte utiliser des sources de rayons X de plus grande dimension (augmentation de l'acceptance angulaire du composant optique).

Le fait de réaliser les moyens de conditionnement avec un gradient en profondeur sur le multicouche constitue ainsi une option de mise en oeuvre de l'invention.

### Précisions sur les moyens de conditionnement bidirectionnels

L'utilisation d'une optique bidimensionnelle pour le conditionnement du rayonnement incident sur un monochromateur peut en particulier permettre de réaliser une collimation dans une première dimension afin de maintenir un angle d'incidence fixe sur le plan de référence du monochromateur, tout en réalisant un deuxième effet monodimensionel dans une deuxième dimension (défnie par le plan X Y sagittal) afin de collecter un maximum de flux incident.

Le conditionnement dans la deuxième dimension peut être une focalisation ou une collimation.

A titre d'illustration, une telle fonction est représentée sur la figure 3 : les rayons divergents dans le plan YZ sont collimatés dans le plan YZ pour maintenir pour le faisceau X2 (qui est réfléchi par l'élément de conditionnement 20) un angle d'incidence de l'ordre de $\theta_\beta$ dans l'acceptance angulaire du monochromateur.

La fonction de collimation selon la première dimension, assurée par l'élément optique 20, permet de limiter la divergence angulaire des faisceaux dans le plan de diffraction (pour chaque rayon X réfléchi, le plan de diffraction est défini comme le plan perpendiculaire à la surface réfléchissante contenant les faisceaux incidents et les faisceaux réfléchis).

Dans le but d'augmenter le flux de rayons X capté au niveau de l'échantillon, il est intéressant d'effectuer un conditionnement suivant une deuxième dimension, par exemple dans le cas de la figure 3 dans le plan XY (plan sagittal).

Ceci permet de limiter la divergence dans ce plan et de maximiser ainsi le flux de rayons X capté à partir de la source et projeté au niveau de l'échantillon après réflexion sur le monochromateur.

Ce conditionnement dans la deuxième dimension (toujours en référence à la figure 3) est effectué tout en assurant les conditions de fonctionnement du monochromateur (limiter la divergence angulaire dans le plan de diffraction). Comme nous l'avons indiqué précédemment, le conditionnement dans la deuxième dimension peut être une focalisation ou une collimation.

La possibilité d'augmenter le flux suivant la deuxième direction (sagittale) en effectuant une focalisation est d'autant plus intéressante que la divergence angulaire $\alpha$ tolérée dans le plan sagittal au niveau du monochromateur est importante dans le cas des applications considérées.

En effet, une divergence $\alpha$ sur la deuxième dimension (dimension sagittale) influence peu l'angle d'incidence des rayons X incidents sur le monochromateur dans le cas du domaine d'application de l'invention (pour les conditions de focalisations rencontrées et les types de monochromateurs considérées).

En référence à la figure 4, la divergence $\alpha$ dans le plan sagittal est donnée par la largeur utile de l'optique de conditionnement $X_l$ dans ce même plan (déterminée par exemple au centre de l'optique), et les distances de focalisations $d_{Foc}$ (distance optique-tache image). La divergence $\alpha$ selon la direction X peut ainsi être approximée par la relation suivante :

$$\tan(\alpha)= ( ( X_l/2 - L/2 ) / (d_{Foc} ) ) \, ,$$

où L est la largeur de la tache image dans le plan sagittal.

Il est connu que la tolérance angulaire d'un monochromateur sur une divergence $\alpha$ dans le plan sagittal (que l'on nommera $\Delta\alpha$) est fonction de l'angle de Bragg $\theta_\beta$ et de acceptance angulaire $\Delta\theta$ de ce monochromateur. En référence au document de M. Schuster et H. Gôbel, J. Phys. D : Applied Physics 28 (1995) A270-A275 « Parallet-Beam Coupling into channel-cut monochromators using tailored multilayers », cette tolérance angulaire $\Delta\alpha$ peut être exprimée de la manière suivante :

$$((\Delta\theta / \tan\theta_\beta)*2)^{1/2} = \Delta\alpha \, ,$$

dans cette formule $\Delta\alpha$ et $\Delta\theta$ sont exprimés en radians.

La tolérance sur la divergence angulaire dans le plan sagittal peut ainsi être déterminée à titre d'exemple pour un cristal de germanium pour des applications Cu-K$\alpha$ ($\theta_\beta$=22,65°, $\Delta\theta$=0,00336°).

On calcule ainsi des divergences limites (tolérance angulaire sur la divergence du faisceau X2) de l'ordre de 1°, ce qui est bien au dessus des convergences requises pour le domaine d'application de l'invention.

En conséquence, le monochromateur peut accepter plus de divergence du faisceau X2 incident suivant la deuxième direction considérée (la direction X sur la figure 3).

Il est donc intéressant de collecter un maximum de flux à partir de la source pour la deuxième direction considérée (direction sagittale).

Cet objectif général concerne aussi bien le dispositif selon l'invention que les dispositifs utilisant de manière connue comme moyens de conditionnement un ensembles optique de type KB.

### *Eclairage supplémentaire sur des avantages spécifiques par rapport à des dispositifs comprenant des moyens de conditionnement de type KB*

Suivant la deuxième directions considérée, c'est à dire la direction pour laquelle le monochromateur peut tolérer plus de divergence (dans le cas de la figure 3 la direction X) l'invention permet de collecter plus de flux à partir de la source par rapport à un dispositif mettant en oeuvre un conditionnement de faisceau initial par un ensemble optique bidimensionnel de type « KB » (en regard ou non) à revêtements multicouches.

Deux phénomènes sont à l'origine de ce gain de flux et nous allons les expliquer ci-dessous.

- Premièrement, dans le cas de l'invention avec un élément optique tel que l'élément 20, ayant une longueur donnée (selon la direction méridionale), on obtient un angle de capture dans la direction sagittale qui est plus important que ce que l'on obtient avec une configuration classique mettant en oeuvre un conditionnement par optique KB,
- Deuxièmement, l'élément optique bidimensionnel 20 tel que mis en oeuvre dans l'invention peut accepter plus de divergence du faisceau initial X1 dans une direction sagittale, et capte donc une surface de la source plus grande en un point quelconque de cet élément 20.

**EP 1 514 279 B1**

En effet, et en référence au premier type d'avantage mentionné ci-dessus, dans le cas du conditionnement réalisé par un ensemble optique de type KB, pour augmenter l'angle solide de collection suivant une direction transverse à la direction moyenne de propagation du faisceau sur J'ensemble optique, il est nécessaire d'augmenter la longueur de cet ensemble optique.

En effet, l'obtention d'un effet bidimensionnel selon une configuration KB est lié à une double réflexion.

A titre d'illustration et en considérant la figure 2, si on allonge le dispositif suivant la direction X ou Z il est nécessaire d'allonger le miroir suivant la direction Y.

Ce phénomène est illustré sur les figures 5a et 5b.

Il est en effet connu que pour les éléments optiques de type KB tout rayon incident doit frapper l'optique dans une zone particulière (correspondant aux zones hachurées sur les figures 5a et 5b) pour subir une double réflexion.

Il en résulte donc que pour un tel type connu d'élément optique de conditionnement (que les miroirs soient accolés ou non) l'angle solide pouvant être collecté est limité par la longueur du composant aussi bien pour les directions transverses horizontales que pour les directions transverses verticales (direction Z ou direction X).

La longueur du composant (suivant la direction méridionale) influe donc à la fois sur les composantes transverses et les composantes longitudinales de l'angle solide de collection pour l'ensemble optique de type KB.

Dans le cas de l'invention, il est possible d'augmenter l'angle solide de collection suivant une direction sagittale, sans augmenter la longueur du dispositif.

Ceci est important notamment dans le cas où l'on souhaite limiter l'encombrement et donc la taille de l'optique.

Cela est notamment le cas à titre d'exemple pour des applications de micro-cartographie rayons X pour la microélectronique où les sources utilisées sont des micro-sources rayons X ayant des tailles de quelques dizaines de microns par quelques dizaines de microns (par exemple 40 microns par 40 microns) et la tache échantillon analysée est de l'ordre d'une centaine de microns par une centaine de microns (par exemple 300 microns par 300 microns).

On désire dans ce cas limiter Ja longueur de l'élément optique de conditionnement à environ 2cm.

Et de manière générale, pour les applications où on cherche à limiter la longueur du dispositif, la combinaison optique mise en oeuvre dans l'invention se révèle particulièrement avantageuse et permet de maximiser le flux réfléchit par le monochromateur tout en minimisant la taille du dispositif.

En outre, un allongement du miroir de conditionnement suivant une direction méridionale (qui est la direction moyenne de propagation des rayons X sur l'optique) a pour effet d'augmenter la surface de multicouche sur laquelle un gradient latéral est appliqué.

Ce type de gradient est appliqué pour compenser la courbure de la surface du composant optique.

Sur les figures 5a et 5b, le gradient des multicouches est appliqué suivant l'axe Y pour les deux miroirs de l'ensemble optique.

En conséquence augmenter la longueur du composant revient à augmenter la surface sur laquelle un gradient est appliqué - ce qui revient à complexifier la fabrication du dispositif.

Pour des optiques de conditionnement à une seule réflexion telles que celles considérées dans l'invention, l'augmentation de l'angle solide de collection suivant une direction sagittale peut se faire à titre d'exemple en augmentant simplement la taille de fentes amovibles pouvant être positionnées en entrée et sortie de l'optique.

Un autre avantage de l'invention est la possibilité de capter une surface de source plus grande en un point donné de l'ensemble optique de conditionnement, et pouvoir ainsi maximiser le flux au niveau de la tache image.

Ce phénomène peut être illustré à l'aide des figures 6a et 6b et de la figure 2, si on considère une source rayons X dont la surface est parallèle au plan XZ défini sur ces figures.

Les figures 6a et 6b illustrent un élément optique 20 de conditionnement tel que mis en oeuvre dans l'invention.

Si on considère un alignement des différentes optiques conforme aux figures 6a est 6b et à la figure 2, pour l'élément optique de conditionnement tel que considéré dans l'invention, la divergence angulaire des rayons X incidents tolérée suivant une direction sagittale en un point quelconque de l'optique est relativement importante en comparaison avec la divergence angulaire tolérée pour les optiques de conditionnement de type KB suivant la même direction (c'est à dire la direction X).

Suivant l'autre dimension de la source (c'est à dire la direction Z), les divergences angulaires tolérées en un point quelconque des deux types d'optiques à effets bidimensionnels sont très voisines et limitées par l'acceptance angulaire du multicouche.

Un déplacement du point source d'émission des rayons X incidents à partir du centre S de la source suivant la direction Z influe directement et significativement l'angle d'incidence de ces rayons X sur un point donné de l'élément optique bidimensionnel quel que soit le type d'optique considéré (de type KB ou optique à une seule réflexion telle que considérée dans l'invention).

Dans le cas de l'élément optique de conditionnement tel que considéré dans l'invention, et en référence aux figures 6a et 6b, une ouverture du faisceau d'émission suivant la direction X (qui correspond à la direction sagittale) par rapport à un faisceau direct provenant du centre de la source n'entraîne que de très petites variations sur l'angle d'incidence en un point quelconque de l'optique.

9

En référence à ces figures 6a et 6b, il est possible de déterminer la divergence angulaire tolérée pour les rayons X incidents au niveau du centre C de l'optique de conditionnement.

La taille selon la direction Z de source pouvant être réfléchie efficacement au niveau du centre de l'optique est donnée par la relation suivante :

$$Z_l = (\cos\theta_s * p) \ (\tan\theta_l - \tan\theta_r),$$

où p est la distance entre le centre de la source et le centre de l'optique. $\theta_s$ est l'angle d'incidence sur l'optique pour un rayon issu du centre S de la source, et $\theta_1$ et $\theta_1$. les angles d'incidence limites donnés par l'acceptance angulaire du multicouche ($\Delta\theta = \theta_1 - \theta_1$,).

Toujours en référence aux figures 6a et 6b, dans le cas de la direction X, la taille de source pouvant être réfléchie au niveau du centre C de l'optique est donnée par la relation suivante :

$$X_l = 2 \ ( \ (p \sin \theta_S / \tan \theta_r \ )^2 - (p \cos\theta_S \ )^2 ) \ ^{\frac{1}{2}}.$$

Les valeurs $X_1$ et $Z_1$ données ci-dessus sont des tailles de sources déterminées dans la limite de l'acceptance angulaire du multicouche.

A titre d'exemple pour des revêtements W/Si utilisés pour des applications Cuivre K$\alpha$, J'acceptance angulaire du multicouche (de l'élément optique de conditionnement 20) est de 0,052° autour d'un angle de 1,26°.

On peut également considérer que l'optique et la source sont alignées tel que l'angle d'incidence $\theta_s$ sur l'optique d'un faisceau issu du centre de la source est donné par l'angle de Bragg du multicouche.

Pour des distances standards sources-optiques de 12 cm, la taille de source pouvant être collectée suivant une direction sagittale au centre de l'optique telle que considérée dans l'invention pourrait ainsi être de l'ordre de 5 cm, et d'environ 110 microns pour la direction Z.

Toujours à titre d'exemple, dans le cas d'ensembles optiques KB pour un même type de multicouche et de distance source-optique, la taille de source pouvant être collectée efficacement en un point donné est limitée à environ 110 microns pour les deux directions concernées (X et Z en référence à la figure 2). Nous reviendrons sur les raisons expliquant cela dans la suite de la description.

Les valeurs mentionnées ci-dessus constituent des limites théoriques (dans les cas ci-dessus pour un multicouche W/Si) de la divergence angulaire du faisceau incident pouvant être tolérée par les éléments optiques de conditionnement comparés ci-dessus.

Or il est également nécessaire dans le cas d'un dispositif selon l'invention, de considérer la divergence tolérée par le monochromateur dans la direction sagittale ainsi que les spécifications liées à l'image que l'on souhaite obtenir (taille, distance), afin de maximiser au final le flux collecté au niveau de la tache image.

En prenant en compte ces considérations, le gain de flux potentiel capté à partir de la source pour des éléments optiques de conditionnement tels que considérés dans l'invention est significatif.

En effet, si on considère à titre d'exemple une source standard rayons-X de taille 300 microns par 300 microns avec une distance de 12 cm entre la source de rayons X et l'ensemble optique de conditionnement, en un point donné de cet ensemble optique il est possible de voir une plus grande surface de la source suivant la direction sagittale que dans le cas des dispositifs connus, à conditionnement par ensemble optique KB.

Dans le cas de l'invention, il est ainsi possible de collecter les 300 microns de source suivant la direction sagittale en un point quelconque de l'optique et cela peut représenter un avantage certain dans le cas où la tâche image souhaitée est relativement large suivant la direction sagittale par exemple pour des taches images de 1 mm de large positionnée à 40 cm de l'optique.

On comprend donc que le dispositif selon l'invention tolère une divergence relativement importante du faisceau X1 issu de la source, suivant une direction particulière. Cela n'est pas le cas pour les dispositifs connus mettant en oeuvre des éléments de conditionnement de type KB.

En référence à la figure 2 et aux optiques KB, la direction qui assure un certain degré de liberté sur la divergence du faisceau incident efficacement réfléchi en un point donné de l'optique pour le premier miroir horizontal 332 est la direction perpendiculaire au centre de la deuxième optique qui est le miroir vertical 331.

Or, dans le cas de cette configuration connue à deux miroirs, la direction perpendiculaire ou approximativement perpendiculaire à la surface d'un miroir correspond à la direction suivant laquelle la divergence d'un faisceau incident entraîne des variations significatives sur l'angle d'incidence.

La taille de source pouvant être collectée en un point donné des ensembles de type KB est donc, compte tenu du phénomène de double réflexion, limité par acceptance angulaire du multicouche pour les deux dimensions de la source. L'invention permet également de s'affranchir de cette limitation.

**Revendications**

1. Dispositif optique destiné à traiter un faisceau incident de rayons X, ledit dispositif comprenant :

   • un monochromateur (M) et
   • un élément optique (20) de conditionnement du faisceau incident dont la surface réfléchissante est apte à produire un effet optique bidimensionnel pour adapter un faisceau à destination du monochromateur, le faisceau incident ayant une incidence inférieure à 10° par rapport à la surface réfléchissante, ledit élément optique comprenant une surface réfléchissante aux rayons X de type structure multicouche,

   **caractérisé par le fait que** ladite surface réfléchissante est constituée d'une surface unique, ladite surface réfléchissante étant conformée selon deux courbures correspondant à deux directions différentes pour produire deux effets monodimensionnels respectifs, l'un des effets étant une collimation pour limiter la divergence angulaire dans le plan de diffraction du monochromateur et l'autre effet étant une focalisation.

2. Dispositif selon la revendication précédente, **caractérisé en ce que** ladite surface réfléchissante unique est du type multicouche à gradient latéral.

3. Dispositif selon l'une des revendications précédentes, **caractérisé en ce que** ladite surface réfléchissante unique comporte un gradient en profondeur.

4. Dispositif selon l'une des revendications précédentes, **caractérisé en ce que** la surface réfléchissante est conformée pour produire une focalisation dans le plan sagittal de l'élément optique de conditionnement.

5. Dispositif selon l'une des revendications précédentes, **caractérisé en ce que** ladite surface réfléchissante a une géométrie sensiblement circulaire selon une première direction, et sensiblement parabolique selon une deuxième direction.

6. Dispositif selon l'une des revendications 1 à 4, **caractérisé en ce que** ladite surface réfléchissante a une géométrie décrite par une courbe ouverte ou fermée différente d'un cercle selon une première direction, et sensiblement parabolique selon une deuxième direction.

7. Dispositif selon l'une des revendications 1 à 4, **caractérisé en ce que** ladite surface réfléchissante a une géométrie sensiblement elliptique selon une première direction, et sensiblement parabolique selon une deuxième direction.

8. Dispositif selon l'une des revendications 5 à 7, **caractérisé en ce que** ladite première direction est la direction sagittale de l'élément optique, et la deuxième direction est la direction méridionale de l'élément optique.

9. Dispositif selon l'une des revendications 1 à 4, **caractérisé en ce que** ladite surface réfléchissante a une géométrie sensiblement toroïdale.

10. Dispositif selon l'une des revendications 1 à 4, **caractérisé en ce que** ladite surface réfléchissante a une géométrie sensiblement paraboloïdale.

11. Dispositif selon l'une des revendications 1 à 4, **caractérisé en ce que** ladite surface réfléchissante a une géométrie sensiblement ellipsoïdale.

12. Dispositif selon l'une des revendications précédentes, **caractérisé en ce que** ladite surface réfléchissante est apte à réfléchir des rayons des raies Cu-K$\alpha$ ou Mo-K$\alpha$.

13. Dispositif selon l'une des revendications précédentes, **caractérisé en ce que** le monochromateur est un cristal de germanium et l'élément optique de conditionnement comprend un revêtement multicouche W/Si à gradient latéral.

14. Dispositif selon l'une des revendications précédentes, **caractérisé en ce que** la surface réfléchissante a un rayon de courbure inférieur à 20 mm selon la direction sagittale de l'élément optique.

15. Dispositif selon l'une des revendications précédentes, **caractérisé en ce que** l'élément optique du dispositif a une longueur de l'ordre de 2 cm, ledit dispositif pouvant être mis en oeuvre avec une source de rayons X dont la taille est de l'ordre de quelques dizaines de microns par quelques dizaines de microns, pour produire une tache échantillon de l'ordre de 300*300 microns.

**Claims**

1. An optical device intended to treat an incident X-ray beam, said device comprising:

   • a monochromator (M) and
   • an optical element (20) for conditioning the incident beam whose reflective surface is able to produce a two-dimensional optical effect in order to adapt a beam in destination of the monochromator, the incident bean having an incident angle of less than 10° relative to the reflecting surface, said optical element comprising a surface reflective to X-rays of the multilayer structure type,

   **characterised by** the fact that said reflective surface consists of a single surface, said reflective surface being shaped according to two curvatures corresponding to two different directions in order to produce two respective one-dimensional effects, one of the effects being a collimation to limit the angular divergence in the diffraction plane of the monochromator, and the other effect being a focusing.

2. A device according to the preceding claim, **characterised in that** said single reflective surface is of the multilayer type with lateral gradient.

3. A device according to one of the preceding claims, **characterised in that** the single reflective surface comprises a depth gradient.

4. A device according to one of the preceding claims, **characterised in that** said reflective surface is shaped for producing a focusing in the saggital plane of the optical element.

5. A device according to one of the preceding claims, **characterised in that** said reflective surface has a geometry which is substantially circular in a first direction and substantially parabolic in a second direction.

6. A device according to one of claims 1 to 4, **characterised in that** said reflective surface has a geometry defined by an opened or closed curve different from a circle in a first direction and substantially parabolic in a second direction.

7. A device according to one of claims 1 to 4, **characterised in that** said reflective surface has a geometry substantially elliptical in a first direction and substantially parabolic in a second direction.

8. A device according to one of claims 5 to 7, **characterised in that** said first direction is the saggital direction of the optical element and the second direction is the meridional direction of the optical element.

9. A device according to one of Claims 1 to 4, **characterised in that** said reflective surface has a substantially toroidal geometry.

10. A device according to one of Claims 1 to 4, **characterised in that** said reflective surface has a substantially paraboloidal geometry.

11. A device according to one of Claims 1 to 4, **characterised in that** said reflective surface has a substantially ellipsoidal geometry.

12. A device according to one of the preceding claims, **characterised in that** said reflective surface is able to reflect rays of the lines Cu-K$\alpha$ or Mo-K$\alpha$.

13. A device according to one of the preceding claims, **characterised in that** the monochromator is a germanium crystal and the optical conditioning element comprises a W/Si multilayer coating with lateral gradient.

**14.** A device according to one of the preceding claims, **characterised in that** the reflective surface has a radius of curvature along the saggital direction of the optical element of less than 20 mm.

**15.** A device according to one of the preceding claims, **characterised in that** the optical element of the device has a length of around 2 cm, said device being able to be used with a source of X-rays whose size is around a few tens of microns by a few tens of microns, in order to produce a sample spot of around 300*300 microns.


**Patentansprüche**

**1.** Optische Vorrichtung zur Behandlung eines einfallenden Röntgenstrahlenbündels, mit:

- einem Monochromator (M) und
- einem optischen Element (20) zum Konditionieren des einfallenden Bündels, dessen reflektierende Oberfläche in der Lage ist, eine zweidimensionale optische Wirkung zu erzeugen, um ein Bündel, mit dem Monochromator als Ziel, anzupassen, wobei das einfallende Bündel einen Einfallswinkel von kleiner als 10° bezüglich der reflektierenden Oberfläche hat, wobei das optische Element eine Röntgenstrahlen reflektierende Oberfläche des mehrschichtigen Typs hat,

**dadurch** gekennzeichnet, daß die reflektierende Oberfläche aus einer einzigen Oberfläche besteht, wobei die reflektierende Oberfläche gemäß zweier Krümmungen entsprechend zweier unterschiedlicher Richtungen gestaltet ist, um zwei jeweilige eindimensionale Wirkungen zu erzeugen, wobei eine Wirkung eine Kollimation ist, um die Winkeldivergenz in der Beugungsebene des Monchromators zu begrenzen, und die andere Wirkung eine Fokussierung ist.

**2.** Vorrichtung nach dem vorstehenden Anspruch, **dadurch gekennzeichnet, daß** die einzige reflektierende Oberfläche vom mehrschichtigen Typ mit lateralem Gradienten ist.

**3.** Vorrichtung nach einem der vorstehenden Ansprüche, **dadurch gekennzeichnet, daß** die einzige reflektierende Oberfläche einen Gradienten in der Tiefe aufweist.

**4.** Vorrichtung nach einem der vorstehenden. Ansprüche, **dadurch gekennzeichnet, daß** die reflektierende Oberfläche gestaltet ist, um eine Fokussierung in der Sagittalebene des optischen Konditionierungselements zu erzeugen.

**5.** Vorrichtung nach einem der vorstehenden Ansprüche, **dadurch gekennzeichnet, daß** die reflektierende Oberfläche gemäß einer ersten Richtung eine im wesentlichen kreisförmige Geometrie und gemäß einer zweiten Richtung eine im wesentlichen parabolische Geometrie hat.

**6.** Vorrichtung nach einem der Ansprüche 1 bis 4, **dadurch gekennzeichnet, daß** die reflektierende Oberfläche gemäß einer ersten Richtung eine durch einen unterschiedlichen offenen oder geschlossenen Bogen eines Kreises beschriebene Geometrie und gemäß einer zweiten Richtung eine im wesentlichen parabolische Geometrie hat.

**7.** Vorrichtung nach einem der Ansprüche 1 bis 4, **dadurch gekennzeichnet, daß** die reflektierende Oberfläche gemäß einer ersten Richtung eine im wesentlichen elliptische Geometrie und gemäß einer zweiten Richtung eine im wesentlichen parabolische Geometrie hat.

**8.** Vorrichtung nach einem der Ansprüche bis 7, **dadurch gekennzeichnet, daß** die erste Richtung die Sagittal richtung des optischen Elements ist und die zweite Richtung die Meridionalrichtung des optischen Elements ist.

**9.** Vorrichtung nach einem der Ansprüche 1 bis 4, **dadurch gekennzeichnet, daß** die reflektierende Oberfläche eine im wesentlichen toroidale Geometrie hat.

**10.** Vorrichtung nach einem der Ansprüche 1 bis 4, **dadurch gekennzeichnet, daß** die reflektierende Oberfläche eine im wesentlichen paraboloidale Geometrie hat.

**11.** Vorrichtung nach einem der Ansprüche 1 bis 4, **dadurch gekennzeichnet, daß** die reflektierende Oberfläche eine im wesentlichen ellipsoidale Geometrie hat.

**12.** Vorrichtung nach einem der vorstehenden Ansprüche, **dadurch gekennzeichnet, daß** die reflektierende Oberfläche in der Lage ist, Strahlen der Cu-K$\alpha$-Linie oder Mo-Ka-Linie zu reflektieren.

**13.** Vorrichtung nach einem der vorstehenden Ansprüche, **dadurch gekennzeichnet, daß** der Monochromator ein Germanium-Kristall ist und das optische Konditionierungselement eine mehrschichtige W/Si-Beschichtung mit lateralem Gradienten aufweist.

**14.** Vorrichtung nach einem der vorstehenden Ansprüche, **dadurch gekennzeichnet, daß** die reflektierende Oberfläche einen Krümmungsradius von weniger als 20mm gemäß einer Sagittalrichtung des optischen Elements hat.

**15.** Vorrichtung nach einem der vorstehenden Ansprüche, **dadurch gekennzeichnet, daß** das optische Element der Vorrichtung eine Länge in der Größenordnung von 2cm hat, wobei die Vorrichtung mit einer Röntgenstrahlungsquelle ausgeführt sein kann, deren Abmessung in der Größenordnung von einigen zehn Mikrometern mal einigen zehn Mikrometern ist, um einen Abtastfleck in der Größenordnung von 300x300 Mikrometer zu erzeugen.

## FIG_1

## FIG_2

FIG.3

FIG.4

FIG.5a

FIG.5b

FIG. 6a

FIG. 6b

**EP 1 514 279 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 6041099 A

**Littérature non-brevet citée dans la description**

• **M. SCHUSTER ; H. GÔBEL.** *J. Phys. D : Applied Physics,* 1995, vol. 28, A270-A275